# EUROPEAN PATENT SPECIFICATION

(11) **EP 4 696 443 B1**
(45) Date of publication and mention of the grant of the patent: **25.11.2026**
(21) Application number: 24217962.0
(22) Date of filing: 06.12.2024
(51) Int. Cl.: B23K 11/11, B23K 11/25, B23K 31/12

(54) **METHOD, DEVICE, APPARATUS AND COMPUTER PROGRAM FOR WELDING QUALITY DETECTION**
VERFAHREN, GERÄT, VORRICHTUNG UND COMPUTERPROGRAMM ZUR SCHWEISSQUALITÄTSERKENNUNG
PROCÉDÉ, DISPOSITIF, APPAREIL ET PROGRAMME INFORMATIQUE POUR DÉTECTION DE QUALITÉ DE SOUDAGE

(30) Priority: 14.08.2024 CN 202411121021
(43) Date of publication of application: 18.02.2026
(73) Proprietor: Tianjin Sunke Digital Control Technology Co., Ltd., Tianjin 301799 (CN)
(72) Inventor: FENG, Eugene, Tianjin, 301799 (CN); ZHANG, Yongzhi, Tianjin, 301799 (CN); NIE, Lanmin, Tianjin, 301799 (CN)
(74) Representative: Hautier IP - MC/EP

(56) References cited:
- FR-A1- 2 892 037
- US-A- 4 503 312
- US-A- 5 436 422
- US-A1- 2018 085 846

## Description

The present invention relates to the field of welding quality detection, and particularly relates to a method, device and computer program product for welding quality detection, see claims 1, 7 and 9.

### Background

Resistance welding, including spot, seam, projection and butt welding, is an efficient, filler metal-free welding method. Resistance spot welders apply electrical voltage on electrodes to create necessary high current through the workpieces, causing the interface of the workpiece melts to form a weld nugget. After the weld nugget is cooled, the welding process is completed. It is an efficient, low cost, and high-speed metal joining method.

However, although resistance spot welding is a widely used technology, it is difficult to detect quality of the weld because the joining area is hidden, rendering it impossible to conduct visual inspection.

In actual production, electrode wear, assembly gap, workpiece surface contamination and other factors will affect the stability of the welding process, resulting in fluctuations in the size of the weld nugget, which in turn produces insufficient weld joint, spatter and other quality defects.

Two types of inspection are used today: destructive and non-destructive. Destructive type inspection methods, like manual chisel, metallographic analysis, etc., have drawbacks of high cost, low efficiency, and hard to implement online. Non-destructive inspection methods, such as ultrasonic testing, infrared testing etc., are better than the destructive inspection in that the work pieces are kept intact, which can save material cost. However, these methods such as infra-red and ultrasonic inspection have the drawbacks of high cost, low efficiency, and requiring specialized inspectors to operate which results in low degree of automation. None of the above-mentioned methods can meet the requirement of a complete inspection.

Patent document US5436422A (describing the preamble of claims 1 and 7) shows a resistance welding control method capable of reducing generation of spatter to the utmost during consumption of electrodes, thereby obtaining a desired nugget and assuring excellent welding quality and controlling with ease. The resistance welding control method comprises the steps of detecting a primary or secondary voltage when the welding current is supplied to the workpiece, monitoring a resistance value of the workpiece at welding operation with the lapse of time based on the primary or secondary voltage and the welding current which is detected in synchronization with the detection of the primary or secondary voltage so that an expansion tendency of electrode tip diameter is recognized and stored as first data in a computer of the resistance welding apparatus and at the same time a spatter generation condition at welding operation is learned and stored as second data in the computer, obtaining a welding current pattern based on the first and second stored data and statistically processed data stored in the computer, and controlling resistance welding by the welding current pattern so as to obtain a desired nugget while reducing generation of spatter to the utmost even in the consumption of electrodes.

### Summary

The present invention is to overcome the above-mentioned problems of low detection efficiency, high cost, and inability to meet requirement of complete detection in the prior art, and to provide a method, device, and computer program product for non-destructive welding quality detection.

The invention is defined in the independent claims 1, 7 and 9.

Further preferred embodiments of the present invention are defined in the dependent claims.

The present invention indirectly characterizes the heat stored in a weld nugget by measuring and analyzing the resistance variation during the cooling process of the weld nugget and using the relationship between the resistivity and the temperature of the metal material, thereby realizing the detection and evaluation of the quality of resistance spot welding.

### Brief description of drawings

FIG. 1 is a schematic diagram of the process of detecting welding defects;
FIG. 2 is a schematic diagram of the installation location of the voltage detection line; and
FIG. 3 is a schematic diagram showing comparison of the weld quality problem curves.

### Detailed description

Exemplary embodiments of the present invention will be described in greater detail below with reference to the accompanying drawings. It should be understood that the present invention may be realized in various forms without being limited by the embodiments, as long as they are falling under the scope of the appended claims. These embodiments are provided to facilitate the person skilled in the art to more thoroughly understand the present invention.

This present invention belongs to the field of resistance welding quality detection, and the technical problem to be solved is how to quickly and easily detect the welding quality.

Resistance welding is a widely used welding technique, the basic principle of which is to make connections between workpieces by applying a voltage on the electrodes therebetween and using the resistance heat generated when the current passes through the workpieces to melt the contact surfaces of the workpieces. The key to this welding method is the generation and control of heat, which is determined jointly by the current, resistance and welding time.

Welding heat generation is represented by the equation Q = I² Rt. Where Q is the heat generated, I is the welding current, R is the inter-electrode resistance and t is the welding time. The inter-electrode resistance is mainly composed of the resistance of the workpiece itself, the contact resistance between the workpieces and the contact resistance between the electrode and the workpiece. The welding current and welding time can be preset according to the welding process to achieve the desired welding result.

The resistivity of a workpiece is one of its important physical properties, which determines the amount of resistance that the workpiece produces when an electric current passes through it. Resistivity increases with the increase of temperature and decreases with the decrease of temperature. Inter-electrode resistance can reflect the contact state between the electrode and the workpiece, varies in the metallurgical process and physical properties during the welding process, which can indirectly characterize the quality of the weld joint.

The resistance spot welding process is divided into two phases: a welding phase in which a pressure is generated by applying a force while power is on for welding, and a cooling phase in which the power is cut off and the pressure is maintained.

In the welding stage, the workpiece is melted by resistive heat, forming a weld nugget that grows.

In the cooling stage, the weld nugget is cooled and solidified under pressure to form a stable weld joint. The size of the nucleus has a direct impact on the quality of the weld joint, that is, too large a weld nugget is prone to spattering defects, while too small a weld nugget may result in an insufficient weld joint.

Resistance spot welding cooling process is a process in which liquid metal weld nugget crystallizes, solidifies and continuously cools to room temperature under pressure. This process is accompanied by phase changes and plastic deformation, and the cooling rate is closely related to the temperature and volume of the weld nugget. The heat absorbed by the weld nugget and the heat dissipation conditions affect the cooling process. When the temperature of the weld nugget is high and the volume is large, more heat is stored and the cooling rate is slow; conversely, when the temperature of the weld nugget is low and the volume is small, the cooling rate is fast.

If the temperature of a weld nugget is too high and the volume of the core is too large, spatter defects are likely to occur, resulting in a large loss of heat stored in the core, the cooling speed in the cooling process becomes faster. On the contrary, if the core temperature is too low, the volume is too small, then the heat stored in the core is low, and the cooling speed in the cooling process is faster than that of a normal weld joint, virtual welding defects will be liable to occur. When the core is cooling to room temperature, the temperature no longer changes, and the resistance tends to stabilize.

Since the cooling characteristic of resistance welding is closely related to the heat stored in the weld nugget, which in turn is related to the temperature and volume of the weld nugget, the cooling characteristics of spot welding can indirectly reflect the quality of weld joints. By observing and analyzing the characteristics of the cooling process, the quality of the weld joints can be evaluated, providing a basis for the optimization of the welding process and quality control.

Based on the above principles, the present disclosure proposes a method, apparatus, device and storage medium for welding quality detection.

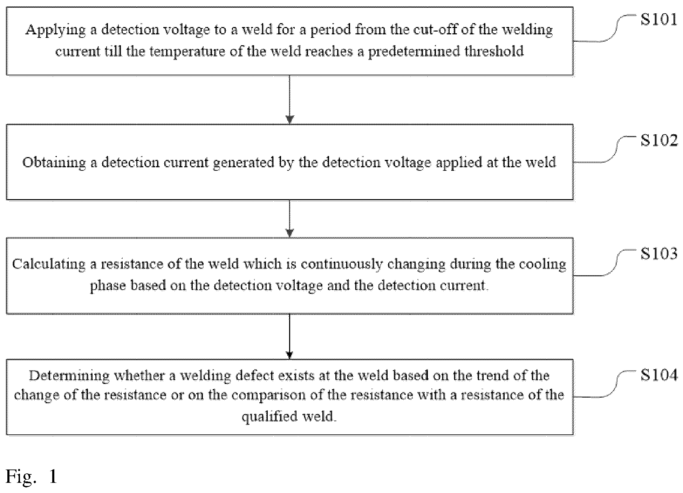

Referring to FIG. 1, a method of evaluating welding defects, comprising:
S101: Applying a detection voltage to a weld for a period from the cut-off of the welding current till the temperature of the weld reaches a predetermined threshold.
S102: Obtaining a detection current generated by the detection voltage applied at the weld.
S103: calculating a resistance of the weld which is continuously varying during the cooling phase based on the detection voltage and the detection current.
S104: Determining whether a welding defect exists at the weld based on the trend of the variation of the resistance or on the comparison of the resistance with a resistance of the qualified weld.

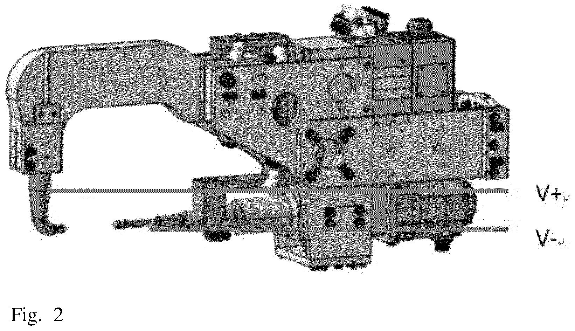

In step S101, as shown in FIG. 2, changes of the voltage between the electrodes are detected in real time with a voltage detection line at both ends of the electrodes of the welding device.

In step S102, a current detection line and a device thereof are installed at a suitable location in the secondary circuit to detect changes in current.

In step S103, during the power-off and pressure maintaining period (cooling phase) of the resistance spot welding, the weld nugget serves as the main heat source, and its heat is dissipated to the electrode, the workpiece, and the surrounding air. Since the resistivity of the electrode and the weld nugget is closely related to the temperature, as the temperature decreases, the resistivity decreases accordingly. Therefore, by detecting the resistance variation of the electrode and the weld nugget, the temperature change during the cooling phase of the weld nugget can be indirectly reflected, thus realizing the determination of the quality of the weld joint.

During the power-off and pressure maintaining period of resistance spot welding, smaller voltages and currents are applied through the test line, in which the current is much smaller than the current used in welding (thousands to tens of thousands of amperes) and therefore do not significantly affect the crystal structure and mechanical properties of the weld nugget.

The measured voltage and current values are recorded during the power-off and pressure maintaining period. The voltage and current values can be recorded at fixed time intervals (e.g., milliseconds) or intermittently (e.g., at key moments such as initial, intermediate, and end).

According to Ohm's law (R = V / I), the resistance was obtained by calculation using the recorded voltage and current values.

In step S104, characteristics of the resistance curve are analyzed, including variations in the initial, intermediate, and end values of the resistance, to determine the quality of the weld.

During the cooling phase of the weld, the initial value of the weld joint at least at the beginning of the weld, the intermediate value during the weld, and the end value at the end of the welding are recorded.

The recorded resistances are compared with the resistances of known qualified weld joints at the same moment to find difference therebetween.

If the difference (deviation) exceeds the permissible deviation range for a normal weld joint, then the joint can be judged as failing.

In addition to simple numerical comparisons, a curve of resistances over time (called the first curve) is generated based on the initial, intermediate and end values of resistances recorded during the cooling phase of the weld.

The generated first curve is compared with a preset curve of the resistance at the qualified weld as a function of time (called the second curve).

The second curve is based on extensive experimental data and experience and represents the trend of resistances during an ideal or qualified welding process.

By comparing the two curves, it is possible to determine whether the weld quality is satisfactory.

In addition to directly comparing the curves, the variation trend of the first curve is also analyzed. The variation trend can be expressed by the slope of the curve, and the change in slope can reflect the speed and stability of the variation in resistance.

If the slope of the first curve remains stable during the welding process, or changes in an expected manner, then this may indicate that the weld quality is qualified. Conversely, if the slope varies abnormally or erratically, this may indicate a problem with the quality of the weld.

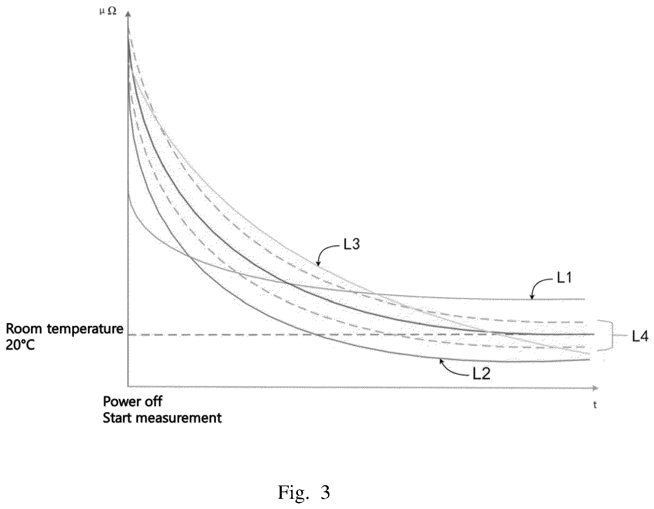

Fig. 3 shows the determination of quality issues.

Insufficient weld joint (L1): Insufficient weld joint has a low melting core temperature, small volume, holds little heat, and has a small melting area, thus leading to this characteristic of the resistance curve L1.

Therefore, if the initial value is less than the initial value at the qualified weld, the intermediate value decreases at a rate smaller than the rate of decrease of the intermediate value at the qualified weld, the end value is greater than the end value at the qualified weld, and the difference between the initial value and the end value is less than a first predetermined threshold, then the weld is determined to be a false weld.

Spatter (L2): If spattering occurs, the resistance curve will show a rapid decrease as the spatter metal takes heat away from the weld nugget and causes a reduction in metal in the core area. The resistance at the end of the spatter will be less than that of a normal joint.

Therefore, if the difference between the initial value and the initial value at the qualified weld is less than the second predetermined threshold, the rate of decline of the intermediate value is greater than the rate of decline of the intermediate value at the qualified weld, the end value is less than the end value at the qualified weld, and the difference between the initial value and the end value is less than the third threshold, then it is determined a spattering occurs.

The first threshold, the second threshold and the third threshold are parameters that can be set for different materials and environments according to the actual situation, and therefore are not limited to specific values.

Still referring to Fig. 3, the analysis of other scenarios includes:
Weld nugget is too large (L3): The beginning resistance is comparable with the qualified joints, the cooling speed is slow, slowly reaching room temperature, the end resistance is smaller than the resistance of qualified joints, and the difference between the initial and end resistances is large.

Weld nugget is too small: Similar to the above curve for insufficient weld joint.

In short, if the resistance at the corresponding time during the cooling process exceeds the tolerance band range L4, it is judged an unqualified weld joint, and which unqualified type the weld joint belong to should be analyzed specifically. If the resistance at the corresponding time during the cooling process is within the tolerance band range L4, it is judged a qualified weld joint.

In an embodiment, the voltage and current measurements are obtained at the initial, intermediate, and end time points to obtain the resistances through calculation, which complies the following steps.
(1) The measured value (R1) is obtained as soon as the welding current is cut off and the test current is on.
(2) At the intermediate value of time (T2) during the power-off and pressure maintaining period, a measured value (R2) is obtained.
(3) A measured value (R3) is obtained when the resistance variation is basically stabilized (T3), i.e., at the end moment of the power-off and pressure maintaining period.

Further, a plurality of measurements (R) may be obtained at a fixed time intervals (e.g., 1ms), and a first curve of resistance over time may thus be plotted.

Statistical calculation is conducted for the measured values of qualified weld joints obtained under the same welding process and conditions. Based on the statistical results, the variation range of the resistance at the corresponding moments in the cooling phase of the qualified joints is determined.

The resistance obtained during the cooling phase of the weld joint to be tested is compared with the resistance of the qualified weld joint at the corresponding moment of the cooling phase under the same welding process and conditions.

If the resistance of the weld joint to be tested is within the variation range as indicated by L4 of Fig. 3, it is judged to be a qualified weld joint; otherwise, it is judged to be an unqualified weld joint.

In-depth analysis of records or curve characteristics of weld joints judged to be unqualified is performed to further determine whether the unqualified weld joints have false welds, spatters, or other welding defects.

The present invention realizes quality determination by using the cooling characteristics of the weld joint, namely to characterize the temperature variation during the cooling phase of the weld nugget by measuring the resistance and comparing it with the resistance of the normal weld joint cooling phase. The technology is capable of detecting all weld joints in real time on the production line, ensuring full coverage and leaving no dead ends. The detection process is quick and easy to automate without human intervention, and fits perfectly with the production rhythm on site without causing production delays.

This present invention conducts the quality detection in the cooling phase, which is subject to fewer external influencing factors, and the heat dissipation process is stable, which can effectively reflect the heat stored in the welded weld nugget during the welding process. By measuring the resistance to characterize the temperature variation during the cooling phase of the weld nugget and comparing it with the resistances in the cooling phase of the normal weld joints, it realizes the quality determination without adding additional sensors, effectively reduces the additional cost and saves the investment. This application can be effectively used for AC and DC welding and has a wide range of applications.

Moreover, the method of the present invention supports a wide range of metallic materials and has strong material compatibility.

The present invention also provides a device 200 for welding quality detection (see claim 7) comprising:
a voltage module 201 for continuously applying a detection voltage to a weld during the cooling phase after the metal material has been welded and the welding current is cut off;
a detection module 202 for detecting a detection current corresponding to the detection voltage;
a calculation module 203 for calculating continuously varying resistances at the weld based on the detection voltage and the detection current; and
a determination module 204 for determining a welding quality based on an initial value, an intermediate value, and an end value of the resistances.

The present invention also provides a storage medium storing a computer-executable program as defined in claim 9, for being called by a processor to perform the steps of the above-described method for welding defect detection.

## Claims

1. A method for welding quality detection, applied on a welding device, said welding device having an operating process comprising a welding phase and a cooling phase after stopping welding current, the method being **characterised by** the following:
applying a detection voltage to a weld for a period from the cut-off of the welding current till the temperature of the weld reaches a predetermined threshold (S101);
obtaining a detection current generated by the detection voltage applied to the weld (S102); calculating a resistance of the weld continuously varying during the cooling phase based on the detection voltage and the detection current (S103); and
determining whether a welding defect exists at the weld based on the trend of the variation of the resistance over time or on the comparison of the resistance with a resistance of the qualified weld current (S104), comprising:
determining there is an insufficient weld joint if, among the continuously varying resistances, the initial value is smaller than the initial value at the qualified weld, the rate of decline of the intermediate value is smaller than the rate of decline of the intermediate value at the qualified weld, the end value is larger than the end value at the qualified weld, and the difference between the initial value and the end value is smaller than the first threshold.

2. The method according to claim 1, wherein determining whether a welding defect exists at the weld based on the trend of the variation of the resistance or on the comparison of the resistance with a resistance of the qualified weld current comprises:
generating a first resistance curve based on the continuously varying resistances;
obtaining a second resistance curve generated based on the continuously varying resistance of the qualified weld at the cooling stage; and
comparing the first resistance curve with the second resistance curve to determine if there is a weld defect.

3. The method according to claim 1, wherein determining whether a welding defect exists at the weld based on the trend of the variation of the resistance or on the comparison of the resistance with a resistance of the qualified weld current comprises:
determining there is a spatter if, among the continuously varying resistances, the difference between the initial value of the resistance at a weld and the initial value at the qualified weld is less than a second threshold, the rate of decrease of the intermediate value of the resistance at the weld is greater than the rate of decrease of the intermediate value at the qualified weld, the end value of the resistance at the weld is less than the end value at the qualified weld, and the difference between the initial value and the end value of the resistance at the weld is less than a third threshold.

4. The method according to claim 1, wherein determining whether a welding defect exists at the weld based on the trend of the variation of the resistance or on the comparison of the resistance with a resistance of the qualified weld current may comprises:
generating a first resistance curve based on the continuously varying resistances; and
determining the quality of the weld based on the trend of varying in the first resistance curve.

5. The method according to claim 1, wherein determining whether a welding defect exists at the weld based on the trend of the variation of the resistance or on the comparison of the resistance with a resistance of the qualified weld current comprises:
conducting statistics about the qualified initial value, qualified intermediate value and qualified end value among the continuously varying resistances at a qualified weld to obtain a variation range of resistance of the qualified initial value, qualified intermediate value and qualified end value based on the statistical results; and
determining the quality of the weld according to the comparison of the initial, intermediate and end values of the continuously varying resistances at the weld to be detected with the variation range of the resistance.

6. The method according to claim 1, wherein applying a voltage to the weld for a period from stopping the welding current till the temperature of the weld reaches a predetermined threshold comprises:
applying voltage to the weld through the poles of the welding gun.

7. A device (200) for welding quality detection, **characterized by** comprising:
a voltage module (201) for applying a detection voltage to a weld for a period from cut-off of the welding current till the temperature at the weld reaches a predetermined threshold;
a detection module (202) for obtaining a detection current generated by a detection voltage applied at the weld;
a calculation module (203) for calculating a resistance of the weld continuously varying in the cooling phase according to the detection voltage and the detection current; and
a determination module (204) configured for determining whether there is a welding defect in the weld according to the trend of variation of the resistance over time or the comparison of the resistance with a resistance of the qualified weld, wherein there is an insufficient weld joint if, among the continuously varying resistances, the initial value is smaller than the initial value at the qualified weld, the rate of decline of the intermediate value is smaller than the rate of decline of the intermediate value at the qualified weld, the end value is larger than the end value at the qualified weld, and the difference between the initial value and the end value is smaller than the first threshold.

8. The device according to claim 7, wherein voltage module (201) comprises applying the detection voltage to the weld through poles of a welding gun, and wherein the detection module (202) comprises obtaining the detection voltage between electrodes of a welding device in real time with a voltage detection line at both ends of the electrodes and obtaining the detection current generated by the detection voltage at the weld with a current detection line and a device thereof that are installed in a secondary circuit.

9. A computer program product comprising instructions which, when executed by the device of claim 7 or 8, cause the device to carry out the method according to any of claims 1-6.

## Patentansprüche

1. Verfahren zur Schweißqualitätserfassung, angewendet auf ein Schweißgerät, wobei das Schweißgerät einen Betriebsprozess aufweist, der eine Schweißphase und eine Abkühlphase nach dem Stoppen des Schweißstroms umfasst, wobei das Verfahren durch Folgendes gekennzeichnet ist:
Anlegen einer Erfassungsspannung an eine Schweißnaht für einen Zeitraum von dem Abschalten des Schweißstroms bis zum Erreichen einer vorbestimmten Schwelle durch die Temperatur der Schweißnaht (S101);
Erhalten eines Erfassungsstroms, der durch die an die Schweißnaht angelegte Erfassungsspannung erzeugt wird (S102);
Berechnen eines Widerstands der Schweißnaht, der sich während der Abkühlphase kontinuierlich ändert, basierend auf der Erfassungsspannung und dem Erfassungsstrom (S103); und
Bestimmen, ob ein Schweißfehler an der Schweißnaht vorliegt, basierend auf dem Trend der Variation des Widerstands über die Zeit oder auf dem Vergleich des Widerstands mit einem Widerstand des qualifizierten Schweißstroms (S104), umfassend:
Bestimmen, dass eine unzureichende Schweißverbindung vorliegt, wenn unter den kontinuierlich variierenden Widerständen der Anfangswert kleiner als der Anfangswert an der qualifizierten Schweißnaht ist, die Abnahmerate des Zwischenwerts kleiner als die Abnahmerate des Zwischenwerts an der qualifizierten Schweißnaht ist, der Endwert größer als der Endwert an der qualifizierten Schweißnaht ist, und die Differenz zwischen dem Anfangswert und dem Endwert kleiner als der erste Schwellenwert ist.

2. Verfahren nach Anspruch 1, wobei das Bestimmen, ob ein Schweißfehler an der Schweißnaht vorliegt, basierend auf dem Trend der Variation des Widerstands oder auf dem Vergleich des Widerstands mit einem Widerstand des qualifizierten Schweißstroms umfasst:
Erzeugen einer ersten Widerstandskurve basierend auf den kontinuierlich variierenden Widerständen;
Erhalten einer zweiten Widerstandskurve, die basierend auf dem kontinuierlich variierenden Widerstand der qualifizierten Schweißnaht in der Abkühlphase erzeugt wird; und
Vergleichen der ersten Widerstandskurve mit der zweiten Widerstandskurve, um zu bestimmen, ob ein Schweißfehler vorliegt.

3. Verfahren nach Anspruch 1, wobei das Bestimmen, ob ein Schweißfehler an der Schweißnaht vorliegt, basierend auf dem Trend der Variation des Widerstands oder auf dem Vergleich des Widerstands mit einem Widerstand des qualifizierten Schweißstroms umfasst:
Bestimmen, dass ein Spritzer vorliegt, wenn unter den kontinuierlich variierenden Widerständen die Differenz zwischen dem Anfangswert des Widerstands an einer Schweißnaht und dem Anfangswert an der qualifizierten Schweißnaht kleiner als ein zweiter Schwellenwert ist, die Abnahmerate des Zwischenwerts des Widerstands an der Schweißnaht ist größer als die Abnahmerate des Zwischenwerts an der qualifizierten Schweißnaht, der Endwert des Widerstands an der Schweißnaht ist kleiner als der Endwert an der qualifizierten Schweißnaht, und die Differenz zwischen dem Anfangswert und dem Endwert des Widerstands an der Schweißnaht ist kleiner als ein dritter Schwellenwert.

4. Verfahren nach Anspruch 1, wobei das Bestimmen, ob ein Schweißfehler an der Schweißnaht vorliegt, basierend auf dem Trend der Variation des Widerstands oder auf dem Vergleich des Widerstands mit einem Widerstand des qualifizierten Schweißstroms Folgendes umfassen kann:
Erzeugen einer ersten Widerstandskurve basierend auf den kontinuierlich variierenden Widerständen; und
Bestimmen der Qualität der Schweißnaht basierend auf dem Trend der Variation in der ersten Widerstandskurve.

5. Verfahren nach Anspruch 1, wobei das Bestimmen, ob ein Schweißfehler an der Schweißnaht vorliegt, basierend auf dem Trend der Variation des Widerstands oder auf dem Vergleich des Widerstands mit einem Widerstand des qualifizierten Schweißstroms umfasst:
Durchführen von Statistiken über den qualifizierten Anfangswert, den qualifizierten Zwischenwert und den qualifizierten Endwert unter den kontinuierlich variierenden Widerständen an einer qualifizierten Schweißnaht, um einen Variationsbereich des Widerstands des qualifizierten Anfangswerts, des qualifizierten Zwischenwert und des qualifizierten Endwerts basierend auf den statistischen Ergebnissen zu erhalten; und
Bestimmen der Qualität der Schweißnaht gemäß dem Vergleich der Anfangs-, Zwischen- und Endwerte der kontinuierlich variierenden Widerstände an der zu erfassenden Schweißnaht mit dem Variationsbereich des Widerstands.

6. Verfahren nach Anspruch 1, wobei das Anlegen einer Spannung an die Schweißnaht für einen Zeitraum vom Stoppen des Schweißstroms bis zum Erreichen einer vorbestimmten Schwelle durch die Temperatur der Schweißnaht umfasst:
Anlegen einer Spannung an die Schweißnaht durch die Pole der Schweißpistole.

7. Vorrichtung (200) zur Schweißqualitätserfassung, **gekennzeichnet dadurch, dass** sie umfasst:
ein Spannungsmodul (201) zum Anlegen einer Erfassungsspannung an eine Schweißnaht für einen Zeitraum vom Abschalten des Schweißstroms bis zum Erreichen einer vorbestimmten Schwelle durch die Temperatur an der Schweißnaht;
ein Erfassungsmodul (202) zum Erhalten eines Erfassungsstroms, der durch eine an der Schweißnaht angelegte Erfassungsspannung erzeugt wird;
ein Berechnungsmodul (203) zum Berechnen eines Widerstands der Schweißnaht, der sich in der Abkühlphase kontinuierlich ändert, gemäß der Erfassungsspannung und dem Erfassungsstrom; und
ein Bestimmungsmodul (204), das konfiguriert ist zum Bestimmen, ob ein Schweißfehler in der Schweißnaht vorliegt, gemäß dem Trend der Variation des Widerstands über die Zeit oder dem Vergleich des Widerstands mit einem Widerstand der qualifizierten Schweißnaht, wobei
eine unzureichende Schweißverbindung vorliegt, wenn unter den kontinuierlich variierenden Widerständen der Anfangswert kleiner als der Anfangswert an der qualifizierten Schweißnaht ist, die Abnahmerate des Zwischenwerts kleiner als die Abnahmerate des Zwischenwerts an der qualifizierten Schweißnaht ist, der Endwert größer als der Endwert an der qualifizierten Schweißnaht ist, und die Differenz zwischen dem Anfangswert und dem Endwert kleiner als der erste Schwellenwert ist.

8. Vorrichtung nach Anspruch 7, wobei das Spannungsmodul (201) das Anlegen der Erfassungsspannung an die Schweißnaht durch Pole einer Schweißpistole umfasst, und wobei das Erfassungsmodul (202) das Erhalten der Erfassungsspannung zwischen Elektroden einer Schweißvorrichtung in Echtzeit mit einer Spannungserfassungsleitung an beiden Enden der Elektroden und das Erhalten des durch die Erfassungsspannung an der Schweißnaht erzeugten Erfassungsstroms mit einer Stromerfassungsleitung und einer Vorrichtung davon, die in einem Sekundärkreis installiert sind, umfasst.

9. Computerprogrammprodukt, umfassend Anweisungen, die, wenn sie von der Vorrichtung nach Anspruch 7 oder 8 ausgeführt werden, die Vorrichtung veranlassen, das Verfahren nach einem der Ansprüche 1 bis 6 auszuführen.

## Revendications

1. Procédé de détection de qualité de soudage, appliqué sur un dispositif de soudage, ledit dispositif de soudage ayant un processus de fonctionnement comprenant une phase de soudage et une phase de refroidissement après arrêt du courant de soudage, le procédé étant **caractérisé par** ce qui suit :
appliquer une tension de détection à une soudure pendant une période allant de la coupure du courant de soudage jusqu'à ce que la température de la soudure atteigne un seuil prédéterminé (S101) ;
obtenir un courant de détection généré par la tension de détection appliquée à la soudure (S102) ;
calculer une résistance de la soudure variant continuellement dans la phase de refroidissement sur la base de la tension de détection et du courant de détection (S103) ; et
déterminer s'il existe un défaut de soudage au niveau de la soudure sur la base de la tendance de variation de la résistance dans le temps ou sur la comparaison de la résistance avec une résistance du courant de soudage qualifié (S104), comprenant :
déterminer qu'il y a un joint de soudure insuffisant si, parmi les résistances variant continuellement, la valeur initiale est inférieure à la valeur initiale au niveau de la soudure qualifiée, le taux de diminution de la valeur intermédiaire est inférieur au taux de diminution de la valeur intermédiaire au niveau de la soudure qualifiée, la valeur finale est supérieure à la valeur finale au niveau de la soudure qualifiée, et la différence entre la valeur initiale et la valeur finale est inférieure au premier seuil.

2. Procédé selon la revendication 1, dans lequel déterminer s'il existe un défaut de soudage au niveau de la soudure sur la base de la tendance de variation de la résistance ou de la comparaison de la résistance avec une résistance du courant de soudure qualifié comprend :
générer une première courbe de résistance sur la base des résistances variant continuellement ;
obtenir une deuxième courbe de résistance générée sur la base de la résistance variant continuellement de la soudure qualifiée dans la phase de refroidissement; et
comparer la première courbe de résistance avec la deuxième courbe de résistance pour déterminer s'il y a un défaut de soudure.

3. Procédé selon la revendication 1, dans lequel déterminer s'il existe un défaut de soudage au niveau de la soudure sur la base de la tendance de variation de la résistance ou de la comparaison de la résistance avec une résistance du courant de soudure qualifié comprend :
déterminer qu'il y a un éclaboussure si, parmi les résistances variant continuellement, la différence entre la valeur initiale de la résistance au niveau d'une soudure et la valeur initiale au niveau de la soudure qualifiée est inférieure à un deuxième seuil, le taux de diminution de la valeur intermédiaire de la résistance au niveau de la soudure est supérieur au taux de diminution de la valeur intermédiaire au niveau de la soudure qualifiée, la valeur finale de la résistance au niveau de la soudure est inférieure à la valeur finale au niveau de la soudure qualifiée, et la différence entre la valeur initiale et la valeur finale de la résistance à la soudure est inférieure à un troisième seuil.

4. Procédé selon la revendication 1, dans lequel déterminer s'il existe un défaut de soudage au niveau de la soudure sur la base de la tendance de variation de la résistance ou de la comparaison de la résistance avec une résistance du courant de soudure qualifié peut comprendre :
générer une première courbe de résistance sur la base des résistances variant continuellement ; et
déterminer la qualité de la soudure sur la base de la tendance à varier dans la première courbe de résistance.

5. Procédé selon la revendication 1, dans lequel déterminer s'il existe un défaut de soudage au niveau de la soudure sur la base de la tendance de variation de la résistance ou de la comparaison de la résistance avec une résistance du courant de soudure qualifié comprend :
effectuer des statistiques sur la valeur initiale qualifiée, la valeur intermédiaire qualifiée et la valeur finale qualifiée parmi les résistances variant continuellement au niveau d'une soudure qualifiée pour obtenir une plage de variation de résistance de la valeur initiale qualifiée, de la valeur intermédiaire qualifiée et de la valeur finale qualifiée sur la base des résultats statistiques ; et
déterminer la qualité de la soudure en fonction de la comparaison des valeurs initiales, intermédiaires et finales des résistances variant continuellement au niveau de la soudure à détecter avec la plage de variation de la résistance.

6. Procédé selon la revendication 1, dans lequel appliquer une tension à la soudure pendant une période allant de l'arrêt du courant de soudage jusqu'à ce que la température de la soudure atteigne un seuil prédéterminé comprend :
appliquer une tension à la soudure à travers les pôles du pistolet de soudage.

7. Dispositif (200) de détection de qualité de soudage, **caractérisé en ce qu'**il comprend :
un module de tension (201) pour appliquer une tension de détection à une soudure pendant une période allant de la coupure du courant de soudage jusqu'à ce que la température au niveau de la soudure atteigne un seuil prédéterminé ;
un module de détection (202) pour obtenir un courant de détection généré par une tension de détection appliquée au niveau de la soudure ;
un module de calcul (203) pour calculer une résistance de la soudure variant continûment dans la phase de refroidissement en fonction de la tension de détection et du courant de détection ; et
un module de détermination (204) configuré pour déterminer s'il existe un défaut de soudage dans la soudure en fonction de la tendance de variation de la résistance dans le temps ou de la comparaison de la résistance avec une résistance de la soudure qualifiée, dans lequel
il y a un joint de soudure insuffisant si, parmi les résistances variant continuellement, la valeur initiale est inférieure à la valeur initiale au niveau de la soudure qualifiée, le taux de diminution de la valeur intermédiaire est inférieur au taux de diminution de la valeur intermédiaire au niveau de la soudure qualifiée, la valeur finale est supérieure à la valeur finale au niveau de la soudure qualifiée, et la différence entre la valeur initiale et la valeur finale est inférieure au premier seuil.

8. Dispositif selon la revendication 7, dans lequel le module de tension (201) comprend : appliquer la tension de détection à la soudure à travers des pôles d'un pistolet de soudage, et dans lequel le module de détection (202) comprend : obtenir la tension de détection entre des électrodes d'un dispositif de soudage en temps réel avec une ligne de détection de tension aux deux extrémités des électrodes et obtenir le courant de détection généré par la tension de détection au niveau de la soudure avec une ligne de détection de courant et un dispositif de celle-ci, qui sont installés dans un circuit secondaire.

9. Produit programme d'ordinateur comprenant des instructions qui, lorsqu'elles sont exécutées par le dispositif de la revendication 7 ou 8, amènent le dispositif à mettre en oeuvre le procédé selon l'une quelconque des revendications 1 à 6.
